# EUROPEAN PATENT SPECIFICATION

(11) **EP 2 200 910 B1**
(45) Date of publication and mention of the grant of the patent: **12.02.2020**
(21) Application number: 08832324.1
(22) Date of filing: 16.09.2008
(51) Int. Cl.: B65F 5/00, B65G 53/48, B65G 65/46, B65G 69/04

(54) **WASTE STORAGE**
ABFALLLAGERUNG
STOCKAGE D'ORDURES

(30) Priority: 18.09.2007 SE 0702155
(43) Date of publication of application: 30.06.2010
(60) Divisional application: 10158622.0
(73) Proprietor: Envac AB, 117 84 Stockholm (SE)
(72) Inventor: EKHOLM, Magnus, S-SE-431 62 Mölndal (SE); JOHANSSON, Alexander, S-SE-412 57 Göteborg (SE)
(74) Representative: Aros Patent AB
(86) International application number: PCT/SE2008/051037
(87) International publication number: WO 2009/038531

(56) References cited:
- WO-A1-00/46130
- WO-A1-2006/135296
- JP-A- 53 058 168
- JP-A- 55 080 603
- JP-A- 2005 104 720
- SE-B- 437 504

## Description

### TECHNICAL FIELD

The present invention relates to a waste storage tank of a vacuum waste collection system according to the preamble of claim 1, and to a method for enhancing the degree of filling waste in such a waste storage tank according to claim 11.

### BACKGROUND

Today, vacuum operated waste collection systems are frequently used for collecting mainly domestic or office waste in residential or business areas, but also for collecting hospital waste, waste from care centers for elderly people etc. In such systems, deposited waste is transported in a pipe system by air flow. In particular, the deposited waste is sucked from separate, spaced deposit or collection points and either to a central collection station - in what is normally referred to as a stationary system - or to a vacuum truck - in what is referred to as a mobile system. In line with a continuing demand for increased waste volumes to be managed in such systems, it has been common for several years to increase the temporary storage capacity at the deposit points by providing waste storage tanks or containers. With the use of such waste storage tanks the manageable waste volumes may be increased without shortening the emptying intervals for the individual deposit points, or, in the relevant case, including an increased number of deposit points in a system.

One general problem related to storage tanks of the traditional type having an inlet opening for deposited waste near one end of the storage tank, spaced from the tank outlet end, is that normally only a fraction of the total tank capacity can be used. This is especially so for indoor storage tanks, such as tanks positioned in a basement, a parking garage or at any other indoor location, where such a single inlet opening is directly connected to a single waste chute. The circumstances are normally such that it is simply not possible or is not cost effective to make room for more than one inlet into the tank.

For outdoor applications, above or below ground, several separated waste inlets leading to the tank have been provided, thereby improving the possible degree of filling without endangering effective emptying of the tank. However, such multiple waste inlets are often not desirable, either for purely esthetical reasons, for cost reasons or due to spatial limitations for the site of the tank or for an entire area.

Furthermore, all storage tanks of such vacuum systems have a practical maximum volume, length and/or height, above which effective and complete emptying can no longer be secured.

WO 2006/135296 A1 discloses a waste storage tank of a vacuum waste collection system according to the preamble of claim 1, and specifically concerns the operation of the waste storage tank. The tank intermittently receives waste through an inlet and accumulated waste is discharged therefrom at intervals. The document suggests a method and a system for improving the waste discharge process that is started by applying vacuum to the tank, and that is effected with the assistance of an agitating and conveying screw conveyor. The screw conveyor is supported close to a bottom section of the tank and is activated when detected air flow and vacuum level values lie above and below respective selected threshold values.

In SE437504 B is disclosed a waste storage compartment formed directly below a waste chute of a building and communicating with a waste suction system. Said publication is mainly directed to solving problems of the suction system that are related to the varying distance of different storage compartments from a suction terminal. The disclosed storage compartment is provided with a storage emptying feed screw that may be driven att different speeds depending upon the position of the compartment in the suction system. It is also disclosed that the feed screw may be reversed to move waste back from an outlet opening of the compartment. Such reversing of the screw may be sufficient to even out the stored waste in the disclosed environment where the storage compartment has only slightly larger dimensions than the outlet from the chute. However, the reversing function is not provided for, and would certainly not allow for, any substantial expansion of the storage compartment.

The technique of said SE437504 B, and even further of the recently developed waste storage tank that includes a screw in the bottom area of the tank, has to a considerable extent improved the emptying conditions of the tank. The screw is operated during emptying and allows secure waste discharge without blocking tendency even from larger sized tanks, by advancing deposited waste towards an outlet during the actual emptying phase, so that it can be sucked away by the vacuum air flow applied thereto. This developed screw tank has to some degree further contributed to increasing the practical tank size. However, it is only concerned with the rapid and secure emptying and does not solve any problems related to the attainable degree of filling or to the required number of inlets to tanks.

In a related technical field that does not utilize the waste suction technique, document JP550800603 A discloses a temporary waste storage tank that is intended for a waste truck. This waste storage tank is provided with a storage chamber accommodating a main feed screw for feeding waste directly to a compactor or similar equipment on board the truck and also with a waste hopper into which waste is supplied manually and from which waste is fed to the storage chamber through a separate feed screw. In this known arrangement the purpose is not to expand the storage capacity but quite to the contrary to minimize the storage tank to fit the confined space available on the truck, primarily by providing the feed screws in sharply inclined positions.

### SUMMARY

It is a general object of the present invention to suggest improvements that enable an increase of the useful storage capacity of a waste storage tank.

In particular it is an object of the invention to suggest an improved waste storage tank of a vacuum waste collection system, providing effective stowing of waste deposited therein to enhance the effective use of the tank storage capacity.

In particular, a further object of the present invention is to provide a method for enhancing the degree of filling of waste in such a waste storage tank of a vacuum waste collection system.

These and other objects are met by the invention as defined by the accompanying patent claims. The invention generally relates to waste collection systems of the kind wherein deposited waste is stored in a waste storage volume of a waste storage tank having one single inlet opening and a bottom emptying screw, and is intermittently transported by partial vacuum from a tank discharge area to a vacuum truck or to a central collection station. Briefly, to achieve the above stated objects, the invention provides a waste storage tank and a method for efficiently stowing the deposited waste with a high degree of filling in the tank by periodically distributing the introduced waste in the tank during periods outside a tank emptying phase and simultaneously preventing packing and compression of introduced waste in the discharge area during such waste distribution.

In one aspect of the invention a considerable improvement of the ratio of waste volume to tank volume is achieved by using the conventional emptying screw as a distribution and stowing screw to move waste within the waste storage volume in the time span between tank emptying cycles and by providing a waste blocking beam at or immediately upstream of the tank discharge area, said blocking beam being activated during stowing operation of the emptying screw.

In one embodiment of this aspect of the invention the fill level of the tank is enhanced even further by combining the stowing operation of the bottom emptying screw with the use of a waste transit space below the single insert opening, but spaced upwardly from the bottom screw, and a feed screw accommodated in the transit space.

In another aspect of the invention a considerable improvement of the ratio of waste volume to tank volume is achieved by arranging at least one transit space accommodating an additional feed screw below the inlet opening but at a substantial distance above the emptying screw and by intermittently activating the feed screw to feed pre-stored waste in the transit space into the tank.

In one embodiment of this aspect of the invention the fill level of the tank is enhanced even further by combining the pre-storage of the deposited waste in the transit space with the use of the conventional emptying bottom screw for performing a redistributing stowing operation of the waste in the tank storage volume during the time between successive tank emptying phases.

Preferred further developments of the basic inventive idea as well as embodiments thereof are specified in the dependent subclaims.

Advantages offered by the present invention, in addition to those described above, will be readily appreciated upon reading the below detailed description of embodiments of the invention.

### BRIEF DESCRIPTION OF THE DRAWINGS

The invention, together with further objects and advantages thereof, will be best understood by reference to the following description taken together with the accompanying drawings, in which:
- Fig. 1: is a schematical and partly sectioned illustration of examples of prior art temporary waste storage tank units;
- Fig. 2: is a schematical and partly sectioned illustration of a basic embodiment of a waste storage tank according to a first aspect of the invention;
- Fig. 3: is a schematical diagram of a stowing operation control system for the bottom screw of the waste storage tank of Fig. 2;
- Fig. 4: is a schematic flow diagram of a method of stowing waste in the tank of Fig. 2;
- Fig. 5A: is a partial perspective view of the discharge area end with the blocking beam, of the tank of Fig. 2;
- Fig. 5B: is a end view of the discharge area end with the blocking beam of the tank of Fig. 2;
- Fig. 6: is a schematical and partly sectioned illustration of a basic embodiment of a waste storage tank according to a second aspect of the invention;
- Fig. 7: is a partial top view of an infeed area of the tank of Fig. 6;
- Fig. 8: is a partial end view of a transit space in the tank of Fig. 6, with a forward part of the tank removed;
- Fig. 9: is a perspective view from above of the tank infeed area and transit space of Fig. 6, likewise with a forward part of the tank removed;
- Fig. 10: is a schematical view from above of the infeed area of the tank of Fig. 6, indicating the relative horizontal dimensions of the inlet opening and the transit space;
- Fig. 11: is a schematical diagram of a control system for the transit space feed screw of the tank of Fig. 6;
- Fig. 12: is a schematic flow diagram of a method of stowing waste in the tank of Fig. 6;
- Fig. 13: is a schematical and partly sectioned illustration of an alternative embodiment of a waste storage tank according to the second aspect of the invention;
- Fig. 14A: is a schematical side view of a further embodiment of the waste storage tank of the second aspect, with a side wall of the tank removed; and
- Fig. 14B: is a schematical top view of the embodiment of the waste storage tank according to Fig. 14A, with a top wall of the tank removed.

### DETAILED DESCRIPTION

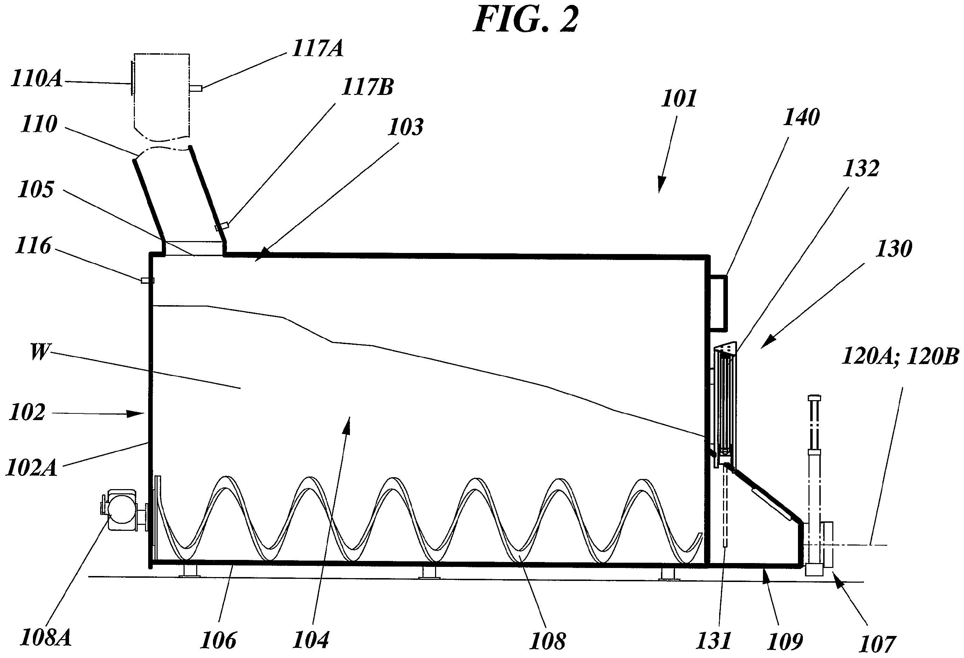

The invention will now be explained with reference to exemplifying embodiments thereof that are illustrated in the accompanying drawing figures 2-14. The illustrated exemplifying embodiments relate to the application of the inventive solution to a waste storage tank of a general configuration that may be employed in a current stationary or mobile type vacuum waste collection system. It shall be emphasized, though that the illustrations are for the purpose of describing preferred embodiments of the invention and are not intended to limit the invention to the details thereof or to the application thereof to any specific type of system.

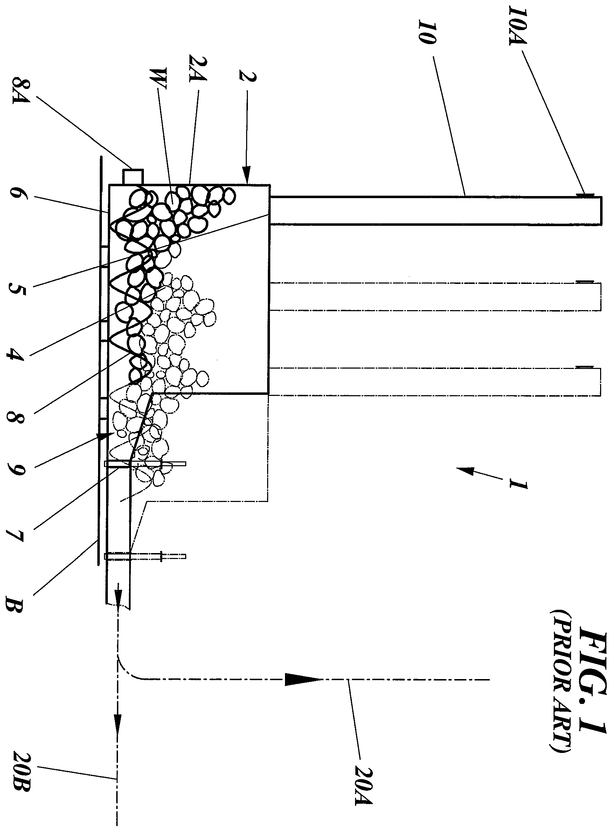

Fig. 1 illustrates variants of a partially and very schematically outlined conventional vacuum waste storage tank or container 2 serving as a waste collection point of a waste collection system 1. The system may be of the mobile type where waste is sucked from the tank 2 into a mobile vacuum truck (not shown) through a transfer pipe 20A or to a central collection station (likewise not shown) through an underground transport pipe system 20B. In such systems, waste W is deposited through opening waste inlets 10A provided in one or several waste chutes 10 communicating with an upper part of the tank 2. The deposited waste W enters the tank 2 through an inlet or infeed opening 5 and is collected and stored in an internal storage volume 4 of the storage tank 2 until it is emptied from a discharge area 9 thereof using the vacuum truck or the system vacuum from the station. In systems comprising several such waste collection points the stored waste is normally emptied from the respective tanks through a controlled waste discharge valve 7.
In order to secure effective and trouble-free emptying the temporary waste storage tank 2 includes a waste agitating and/or feeding means 8 that is positioned close to a bottom area 6 thereof that rests on a base B, such as a basement floor or a bottom wall of a plastic or concrete cistern. The agitator 8 is supported for rotation in a rear tank wall 2A that also supports an agitator drive motor 8A.

In such a conventional tank 2, the dimensions of the tank largely affect the possible degree of filling of the tank with introduced waste W. As is indicated with full lines in Fig. 1, the use of only one waste chute 10 to introduce deposited waste into the tank tends to cause a pile up of waste W in the vicinity of the tank rear wall 2A. This in turn means that a very large part of the tank ***waste collection*** volume 4 may not be used for the storage of waste. In a typical prior tank configuration of reasonable size and having a single inlet opening 5, the attainable degree of filling is only about 40%, which is far from acceptable, not least from a cost efficiency viewpoint. The only practical solution to this problem has, for single insert opening tanks, so far been to provide smaller sized storage tanks requiring frequent emptying.

However, larger tanks are frequently desired in order to meet increasing waste deposit volumes. The use of larger volume tanks requires the use of several waste chutes 10 that are spaced from each other along the length of the tank 2. This means that the introduced waste is piled up in several piles along the length of the tank 2, as is illustrated in dash-dot lines in Fig. 1. In the latter example, using multiple insertion chutes 10, a degree of filling of up to approximately 75% may at best be obtained. This option of providing multiple waste chutes is many times unavailable for lack of necessary space or for aesthetical reasons, as was briefly discussed in the introduction,
To overcome the above described disadvantages and problems with the known waste storage tanks, the present invention suggests a novel approach for a storage tank as well as for its method of operation and aims at achieving degrees of filling for a single inlet opening tank of at least 75%. This is basically achieved by means of the solution according to the present invention, which briefly involves performing periodical distribution sequences DS in the time span between successive tank emptying phases to accomplish improved stowing of the waste in the tank, and by simultaneously preventing packing and compression of waste during said distribution sequences DS. With such an approach it will be possible to increase the degree of filling for a single inlet tank up to between 75% and theoretically 100%, thereby making the storage tank extremely cost efficient in comparison with prior art.

A basic embodiment of the invention will now be described with reference to the illustrations in Figs. 2-4 and 5A-5B. In this embodiment the distribution sequences DS are performed in a waste collection system 101 that generally resembles that of Fig. 1, especially with regard to the overall configuration of the waste storage tank 102 having a bottom agitating screw 108 that is rotated by a drive motor 108A supported in a tank ***end*** wall 102A and extended close to a tank bottom 106. Waste W that is deposited through inlets 110A of a waste chute 110 is introduced into the tank ***waste*** collection volume 104 through an inlet opening that is positioned at an infeed area 103 close to the tank end wall 102A. The collected waste W is then emptied from a tank discharge area 109 by vacuum applied through a transport pipe 120A and 120B, respectively, and possibly through a discharge valve 107. As described so far, the tank 102 is very similar to that of Fig. 1.

As described above the bottom screw 108 is conventionally operated solely during emptying of the tank, in order to speed up and generally secure a problem free discharge. In accordance with this basic embodiment of the invention the bottom screw 108 is additionally, periodically operated for performing a distribution and thereby improved stowing of the waste W collected in the tank ***waste*** collection volume 104. This distribution is performed periodically in distribution sequences DS during periods outside said emptying phases and is basically performed by rotating the bottom screw 108 in a direction for feeding waste W in the ***tank*** waste collection volume 104 in a direction towards the ***tank*** discharge area 109. However, the invention likewise covers additional intermittent operation of the bottom screw 108 in the opposite direction, for feeding waste W towards the tank end wall 102A, during at least some of the distribution sequences DS outside said emptying phase. The operation of the bottom screw 108 in the latter direction may normally only be performed with a few full turns, in order to avoid locking of the screw against the ***tank*** end wall 102A.

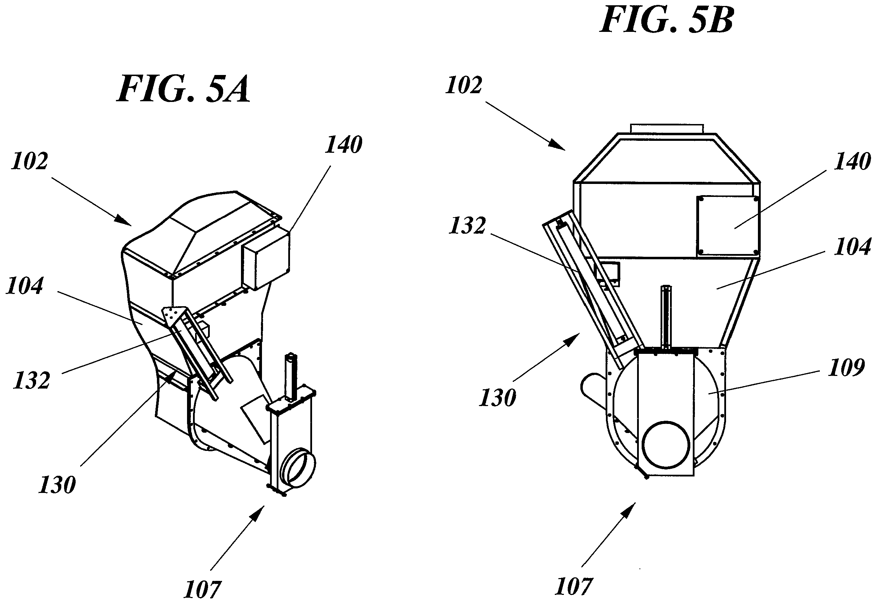

To provide secure stowing without creating blockage, the tank 102 is furthermore provided with a blocking device 130 for preventing packing and compression of introduced and collected waste W in the ***tank*** discharge area 109 during said distribution sequences DS. The blocking device (see especially Figs. 5A-B) is here schematically illustrated as a blocking beam or bar 131 that is provided close to a transition area between the tank ***waste*** collection volume 104 and the normally conical ***tank*** discharge area 109. The blocking beam 131 is here operated by a pneumatic cylinder 132 and is specifically extendable to at least partly block said transition area between the ***tank waste*** collection volume 104 of the tank 102 and the ***tank*** discharge area 109, in order to prevent waste from entering the ***tank*** discharge area 109 during all or optional distribution sequences. It will be appreciated that when not activated the blocking beam will be retracted by the cylinder 132.

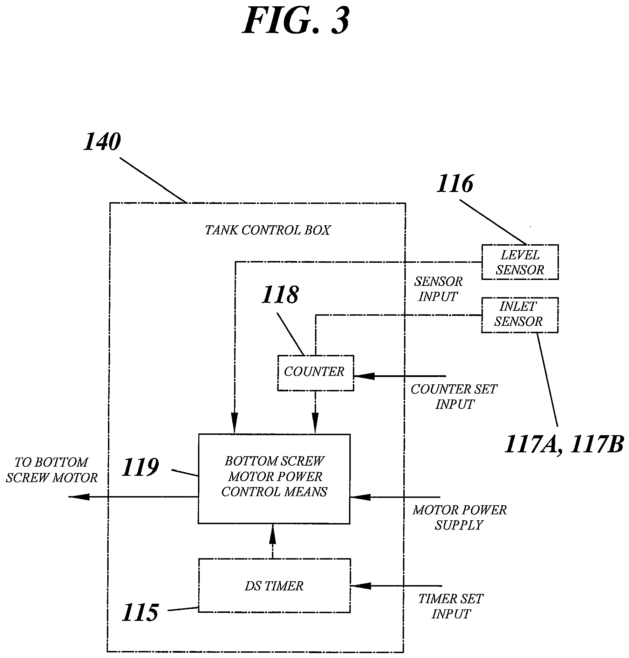

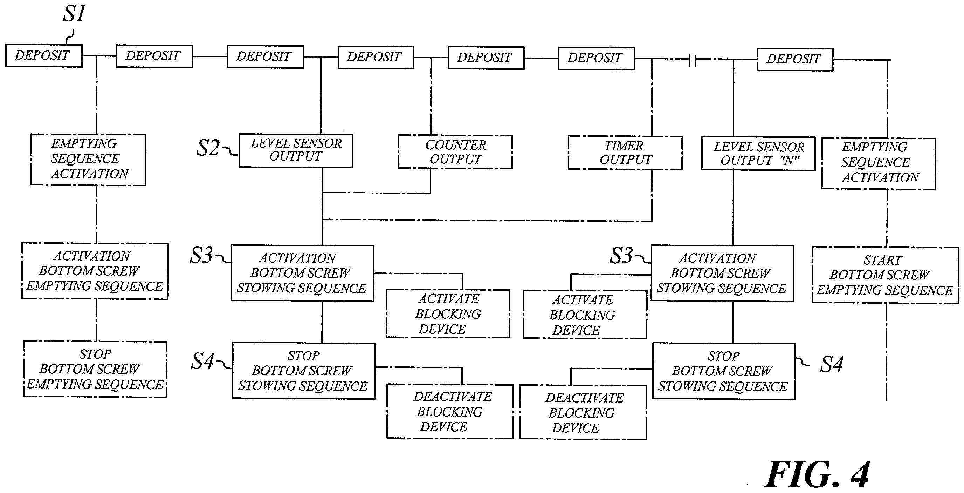

The activation or starting of the distribution sequences DS may be implemented in different ways, such as by means of a level sensor (normally an analogous sensor) 116 provided in the infeed area 103 closely below the infeed or inlet opening 105. In other words, in this case, a distribution sequence DS is initiated in response to an input from such a level sensor 116, indicating that waste W has piled up to such a level that it may cause blockage of the infeed opening 105. In such a case, and with reference to Figs 3 and 4, an output signal from the level sensor 116 is fed to a control box 140, normally the control box for controlling the different tank operations, including the emptying sequences. This control box 140 normally contains a bottom screw motor control means 119 that controls the transfer of a motor power supply to the bottom screw ***drive*** motor 108A for the activation thereof in the requested direction. It will now be appreciated that the sensor signal is input to the motor control means 119 to start the ***drive*** motor 108A for the distribution sequence DS. In a further development, further level sensors (not illustrated) may be provided at other locations in the tank 102 to give an indication of the fill level in other areas of the tank ***waste collection*** volume 104.

Alternatively or additionally, starting of the distribution sequences DS may be initiated based on input from sensors 117A and/or 117B provided to detect opening of waste deposit inlets 110A or to detect actual waste items falling through the ***waste* c**hute 110. As will be seen in Fig. 3, this sensor input is fed to a counter 118 that signals the motor control means 119 when a preset number of input signals have been registered.

In a further alternative, the distribution sequences DS may be controlled based on the elapsed time since a previous distribution sequence DS and specifically, the activation of said distribution sequences may be controlled by a DS-timer 115 that after a selected and preset time sends an activation signal to the motor control means 119.

Deactivation of the distribution sequence DS may similarly be initiated based on a freeing signal from a further, not illustrated, lower level sensor or based on a fixed, predetermined sequence time and will naturally be initiated when an emptying sequence is due. The control of the operation of the blocking device 130 is not specifically illustrated in Fig. 3, but is normally controlled in direct response to the activation and deactivation of a distribution sequence DS, as indicated in Fig. 4, so that the blocking device 130 is in blocking position shortly prior to or at the start of a distribution sequence DS.

In Fig 4 is illustrated the general procedure of a distribution sequence DS. After a performed emptying sequence there is continuous build-up of waste in the tank through successive deposits in what is denoted step S1. In step S2 there is an activation of a distribution sequence DS through a level sensor output, a preset counter output or alternatively a preset timer output. This causes activation of the bottom screw 108 distribution or stowing sequence in step S3 and simultaneous activation of the blocking device 130. Finally, in step 4, the distribution sequence DS is stopped, stopping the bottom screw 108 and deactivating the blocking device 130. Then, after an optional number "N" of stowing or distribution sequences DS, the tank 102 will be ready for emptying again. As was mentioned before, the described inventive distribution operation of the tank of the invention, having only one inlet opening, will lead to a continuous increase of the attainable degree of filling, and tests have shown that with the now described embodiment a degree of filling of at least 70-75% will be obtained.

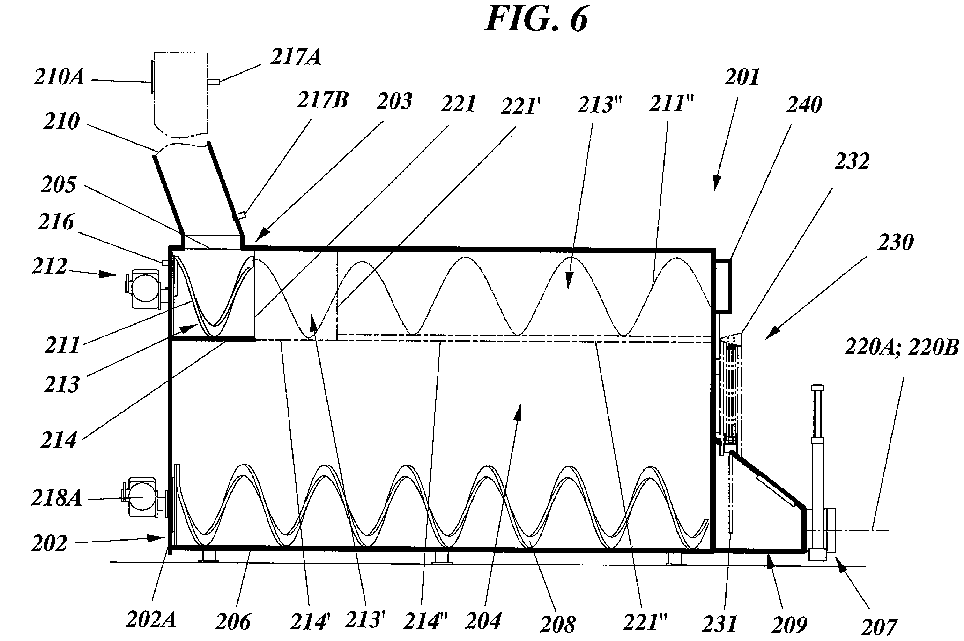

Another basic embodiment of the invention will now be described with specific reference to the schematic illustrations in Figs. 6-12. In this basic second embodiment the distribution sequences DS are likewise performed in a waste collection system 201 that generally resembles that of Fig. 1, as well as Fig. 2, especially with regard to the overall configuration of the waste storage tank 202. The parts and components being common to the tanks of Figs 2 and 6 will therefore not be specifically described again. Such common parts have been denoted using the same basic reference numerals, but are in Fig. 6 numbered in a 200-series as compared to the corresponding parts of Fig. 2 that are numbered in a 100-series.

In the second basic embodiment illustrated in Fig. 6, the bottom screw 208 is used as a conventional emptying screw and the distribution and thereby improved stowing of waste collected in the tank 202 collection volume 204, is initiated generally at an upper area of the tank 202. Specifically, the waste that is introduced through the infeed or inlet opening 205 is received in a transit space 213 that is formed in the upper infeed area 203 of the tank 202, directly below said infeed opening 205. The deposited waste is maintained in the transit space 213 for a pre-storage period PSP. Distribution sequences DS are activated by periodically feeding the received and pre-stored waste from the transit space 213 and into the tank collection volume 204 upon expiry of the pre-storage period PSP. This periodic feeding of the pre-stored waste is performed by means of an upper feed or stowing screw 211 that is likewise supported for rotation in a ***tank*** end wall 202A of the tank 202. In the distribution sequences DS that may or may not be performed only during periods outside said emptying phases, the upper feed screw 211 is rotated in a direction for feeding waste in the transit space 213 generally in a direction towards the discharge area 209. This rotation is caused by a feed screw motor 212, likewise supported in the ***tank*** end wall 202A.

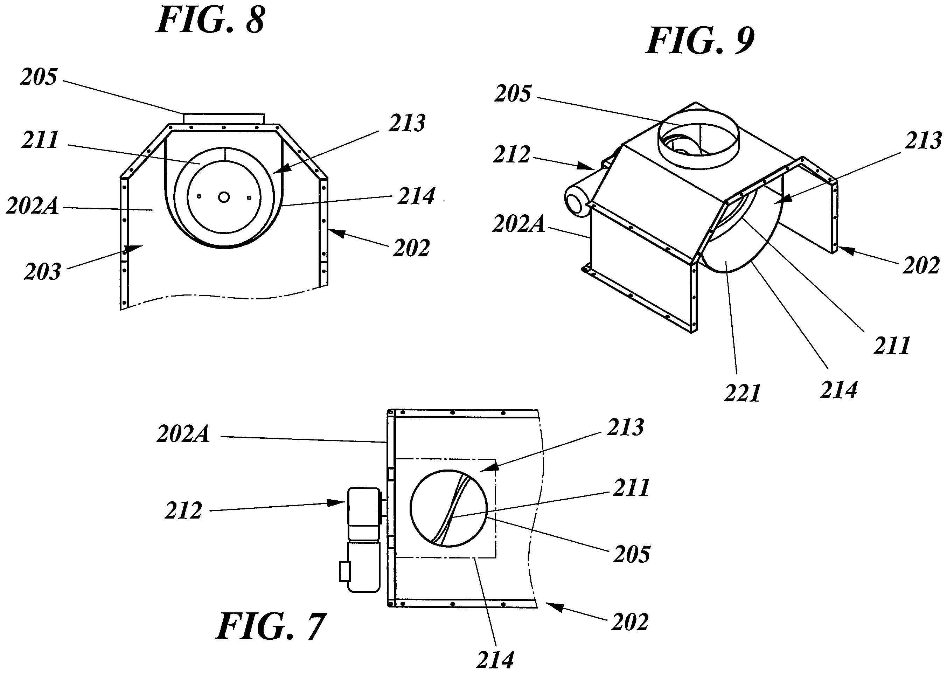

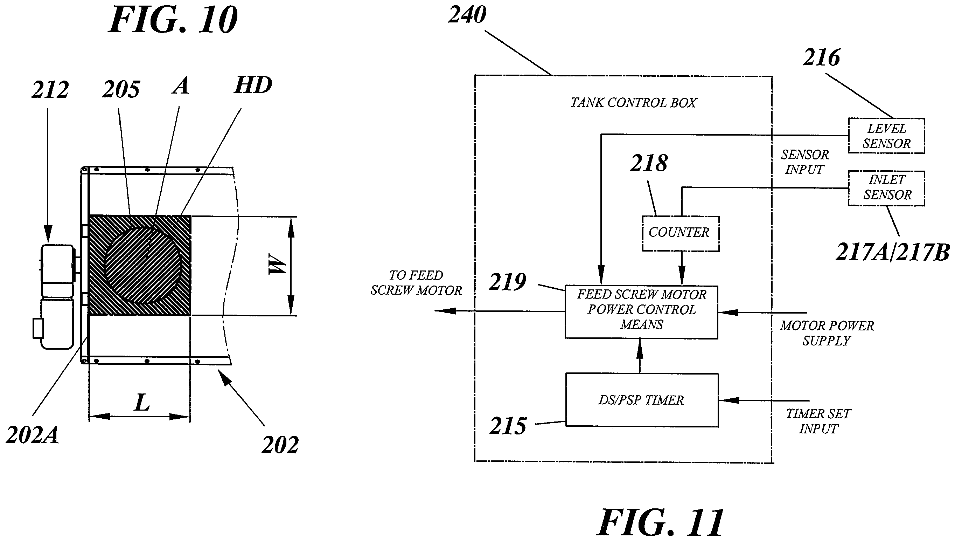

With specific reference also to Figs. 7-9, it will be seen that the transit space 213 is formed by a trough-like ***transit space*** channel 214 that is secured to the tank 202 in said upper infeed area and into which the infeed opening 205 opens. The upper feed screw 211 is accommodated for rotation within the transit space channel 214, such that rotation thereof will feed the pre-stored waste out through a discharge opening 221 at an open discharge end thereof, and into the tank collection volume 204. In this exemplifying embodiment the introduced waste is received and pre-stored directly underneath the waste infeed opening 205 and the transit space 213 has a restricted shape, with its horizontal dimensions HD, in other words its width W and length L (see Fig. 10), being only slightly larger than the area A of the waste infeed opening 205. By providing the discharge end opening 221 in such a way, well spaced in a vertical as well as horizontal direction from the tank discharge area 209 packing and compression of waste in the discharge area 209 will be avoided. This is true also for all further variants of this second embodiment that are described below.

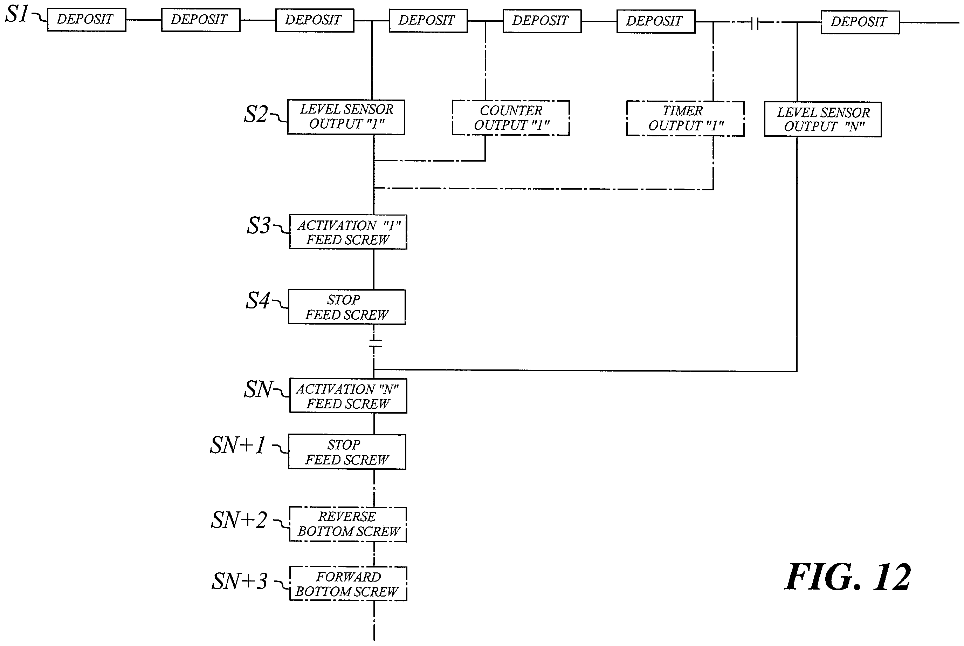

The activation or starting of said distribution sequences DS may in this embodiment also be implemented in different ways, such as by controlling feed screw 211 operation depending upon sensed waste deposit parameters of the system 201. Thus, in this case, the volume or the level of waste received in the transit space 213 may be registered by means of a level sensor 216 provided in the transit ***space*** 213 closely below the infeed opening 205. A distribution sequence DS will then be initiated in response to an input from such a level sensor 216, indicating that waste has piled up to such a level that it may cause blockage of the infeed opening 205. With reference to Figs 11 and 12, an output signal from the level sensor 216 is then fed to a control box 240, again normally the control box for controlling different tank operations, including the emptying sequences. Apart from the mentioned emptying screw controls, the control box 240 in this embodiment contains also a feed screw motor control means 219 that controls the transfer of a motor power supply to the upper feed screw motor 212 for the activation thereof. It will now be appreciated that the sensor signal is input to the motor control means 219 to start the motor 212 for the distribution sequence DS.

Alternatively, the starting of the distribution sequences DS may in this embodiment also be initiated based on input from sensors 217A and/or 217B provided to detect opening of waste deposit inlets 210A or to detect actual waste items falling through the inlet chute 210. As will be seen in Fig. 11, such sensor input is fed to a counter 218 that signals the motor control means 219 when a preset number of input signals have been registered. In a further alternative, the distribution sequences DS may also be controlled based on the elapsed time since a previous distribution sequence DS and specifically, the activation of said distribution sequences may be controlled by a DS/PSP-timer 215 that after a selected and preset time sends an activation signal to the motor control means 219. Deactivation of the distribution sequence DS may similarly be initiated based on a freeing signal from a further, not illustrated, lower level sensor or based on a fixed, predetermined sequence time.

In Fig 12 is illustrated the general procedure of an actual distribution sequence DS of the second embodiment. In this case an emptying sequence is not indicated, but it should be obvious that such emptying is performed in the conventional manner as the tank becomes full. Again, there is a continuous build-up of waste in the tank 202 through successive deposits in what is denoted step S1. In step S2 there is a start of a distribution sequence DS through a level sensor output "1", a preset counter output "1" or alternatively a preset timer output "1". This causes activation of the upper feed screw 211 distribution or stowing sequence in step S3. Finally, in step 4, the distribution sequence DS is stopped, stopping the feed screw 211. Then, after an optional number of distribution sequences DS, the tank 202 will be ready for emptying again. This described second embodiment of the inventive distribution or stowing operation in a tank of the invention, having only one inlet opening, will again lead to a continuous increase of the degree of filling, up to and above 70-75%. By locating the transit space discharge opening 221 at a level well above the transition area between the tank collection volume 204 and the tank discharge area 209, the waste fed from the transit space 213 will fall loosely down onto waste already present in the collection volume 204, and packing or compression of the waste in the discharge area 209 will effectively be avoided.

An even further increase of the degree of filling of the tank 202 may be obtained by combining the first and second embodiments, as is indicated by steps SN+2 and SN+3 illustrated in dash-dot lines in Fig. 12. Specifically this means that the bottom screw 208 of Fig. 6 is also used for the stowing screw function previously described in connection with Figs. 2-5 and the tank 202 may comprise the likewise described blocking device 230-232. In such a case both motor control means 119 and 219 would be present in the tank control box 240, connected to their respective detecting and/or registering means, as described. In such a combination it may be especially advantageous to employ both the normal forward distributing action (step SN+3) of the bottom screw 208 and the previously described additional intermittent operation of the bottom screw 208 in the opposite direction (step SN+2), for feeding waste W towards the tank end wall 202A, during at least some distribution sequences DS outside the emptying phase. This operation of the bottom screw 108 in the latter direction will serve to stow waste effectively in under the transit space 213. In practical operation, the bottom screw 208 is normally operated for a selected time in the direction for feeding waste in the waste collection volume 204 generally rearwardly, away from the discharge area 209, after a fixed or controlled number "SN" of operations of positively feeding pre-stored waste from the transit space 213 into the tank waste collection volume 204. After operating the bottom screw 208 in the rearward feeding direction for the selected time, it may be reversed to feed waste in the collection volume 204 in a forward direction, towards the discharge area 209. Such control of the bottom screw operation is normally performed in the ordinary bottom screw control system. With the described combination it will be possible to obtain a degree of filling of close to 100%.

In Fig 6 is also illustrated, with dash-dot lines, possible variations of the actual configuration of the transit space 213', 213" and feed screw 211". Specifically, the transit space channel 214', 214" and feed screw 211" may be designed having optional length and with one or several horizontally 221' or vertically 221" directed discharge openings in the channel. In one variant the transit space 213" is extended across the full length of the tank 202 collection volume 204. In such a case the transit space channel 214" may preferably be made having a bottom side formed by spaced bars allowing waste to fall down at optional longitudinal positions through the discharge opening 221" formed there between.

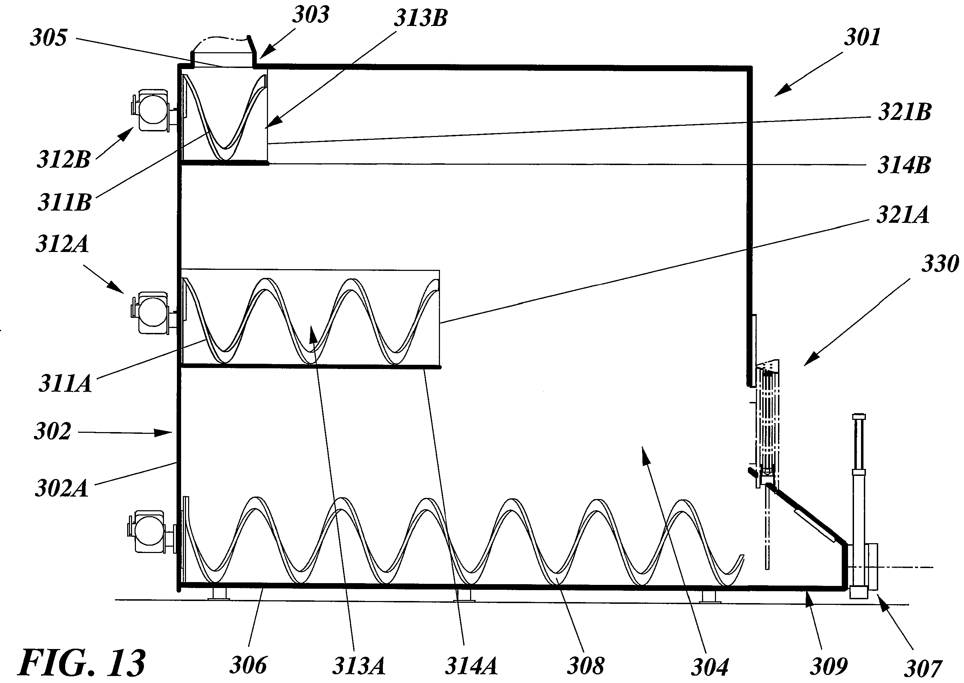

A further possible variation of the general embodiment of Fig. 6 is illustrated in Fig. 13. Here, parts common to the embodiment of Fig. 6 have been denoted using the same basic reference numerals, but are in Fig. 13 numbered in a 300-series as compared to the corresponding parts of Fig. 6 that are numbered in a 200-series. In this variation, transit spaces 313A, 313B with feed screws 311A, 311B and their respective drive motors 312A, 312B are supported at different levels, in the illustrated example two, above the tank 302 bottom 306. Preferably, the transit spaces 313A, 313B and their feed screws 311A, 311B are designed so that they have an increasing length the closer to the bottom of the tank 302 they are positioned. The transit space discharge openings 321A, 321B are likewise positioned at different levels, but both at a level well above the tank discharge area 309. With such a variation of the invention, the advantageous degree of filling may be maintained even in single inlet tanks 302 having an increased height. In this variant the transit space distribution may likewise be combined with a bottom screw 308 stowing operation.

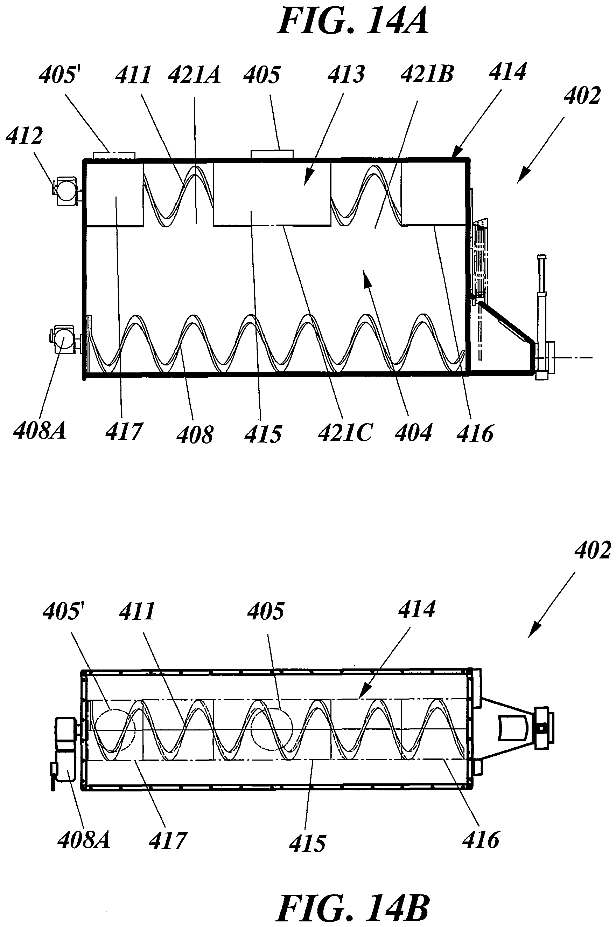

Finally, in Figs. 14A and 14B is illustrated a further variation of the tank of Fig. 6. Here, the transit space 413 is formed in several, here three, sections by separate channel parts 415, 416 and 417 secured to the tank 402, in the upper area thereof. The channel parts 415-417 all accommodate a section of the feed screw 411 that extends the full length of the tank collection volume 404. Between the channel parts are formed discharge openings 421A, 421B. In this embodiment the feed screw 411 may preferably be rotated in either direction, for providing an excellent distribution of the waste. The tank may again have an infeed opening 405' close to the tank end wall, above one channel side part 417, but for outdoor applications the inlet opening 405 is preferably provided above, and communicating with the central channel part 415. In this case, the central channel 415 part may also be provided with an additional bottom discharge opening 421C generally aligned with the inlet opening 405. This will, together with a feed screw 411 operation in two opposite directions, provide extremely good conditions for waste distribution, again optionally in combination with a bottom screw 408 stowing operation. Although the invention has been described and illustrated with specific reference to practical embodiments thereof as well as to exemplary applications thereof, the invention is in no way restricted to such embodiments or to such applications. The basic principles of the invention may therefore be applied to any type of present or future vacuum waste collection system where a temporary storage space is required and in underground applications as well as in applications above ground.

In alternative, but not specifically illustrated embodiments of the invention variations of the different illustrated parts of the tanks may be employed without departing from the scope of the invention. One example thereof is the use of the present invention, as described above, in a storage tank having a single inlet opening located in a different position, such as in an upper area of the ***tank*** end wall **(*tank*** end wall 102A in Fig. 2) of the tank or in any other upper area of the tank, above the bottom screw.

The invention has been described in connection with what is presently considered the most practical and preferred embodiments, but it is to be understood that the invention is not limited to the disclosed embodiments. The invention is therefore intended to cover various modifications and equivalent arrangements included within the scope of the appended claims.

## Claims

1. A waste storage tank (102; 202; 302; 402) of a vacuum waste collection system (101; 201; 301; 401), having a waste infeed opening (105; 205; 305; 405) in an infeed area (103; 203; 303) thereof, a tank waste collection volume (104; 204; 304; 404) for temporary storing waste (W) introduced through the infeed opening, a lower tank discharge area (109; 209; 309) to which vacuum is applied for emptying of the waste storage tank (102; 202; 302; 402) and means (108, 115-119; 211-214, 215-219; 311-314; 411-414) for stowing and distributing waste (W) in distribution sequences (DS) inside the waste storage tank (102; 202; 302; 402), said means comprising a waste emptying screw (108; 208; 308; 408) in a bottom area (106; 206; 306) of the tank waste collection volume (104; 204; 304; 404) for assisting emptying of the waste storage tank (102; 202; 302; 402), and associated first control means (115-119) for activating and controlling operation of the waste emptying screw (108; 208; 308; 408), **characterized in that** the associated first control means activates and controls operation of the waste emptying screw (108; 208; 308; 408) at least in the direction for feeding waste in the tank waste collection volume (104; 204; 304; 404) towards the lower tank discharge area (109; 209; 309) during the distribution sequences (DS) outside tank emptying phases, and by means (130-132; 230-232; 330; 221; 221'; 221"; 321A, 321B; 421A-C) for preventing packing and compression of waste in the discharge area (109; 209; 309) during said distribution sequences (DS) comprising a blocking beam (130-132; 230-232; 330) extendable into a transition area between the tank waste collection volume (104; 204; 304; 404) and the tank discharge area (109; 209; 309), as well as retractable therefrom.

2. The waste storage tank (202; 302; 402) according to claim 1, **characterized in that** the means for stowing and distributing waste further comprises a waste transit space (213; 213'; 213"; 313A, 313B; 413) for receiving and pre-storing deposited waste (W), an upper feed or stowing screw (211; 211"; 311A, 311B; 411) supported in the waste transit space (213; 213'; 213";313A,313B; 413) for intermittent feeding of the received and pre-stored waste therefrom and into the tank waste collection volume (204; 304; 404) and second control means (215-219) for controlling activation of the upper feed or stowing screw (211; 211"; 311A, 311B; 411).

3. The waste storage tank (202; 302; 402) according to claim 2, **characterized in that** the means for preventing packing and compression of introduced waste (W) further comprises at least one discharge opening (221; 221'; 221"; 321A, 321B; 421A-C) provided at an open discharge end of the waste transit space (213) forming a trough-like channel (214) at a level well above the tank discharge area (209; 309).

4. The waste storage tank (102; 202; 302; 402) according to any of claims 1-3, **characterized in that** the first and second control means (115-119; 215-219) each comprise a timer (115; 215) for setting distribution sequence and/or pre-storage times (DS/PST) at scheduled intervals that depend upon the actual application or alternatively a counter (118, 218) for registering a number of waste deposits and for setting the distribution sequence and/or pre-storage times at intervals that depend upon the number of registered waste deposits.

5. The waste storage tank (102; 202; 302; 402) according to any of claims 2-4, **characterized in that** the first control means (115-119) comprise at least one level sensor (117) for detecting a waste fill level in the waste storage tank and/or the second control means (215-219) comprise at least one level sensor (217) for detecting a waste fill level in the waste transit space (213; 213'; 213"; 313A, 313B; 413).

6. The waste storage tank (202; 302; 402) according to any of claims 2-5, **characterized in that** the waste transit space (213; 313B; 413) is located directly beneath the waste infeed opening (205; 305; 405; 405').

7. The waste storage tank (202) according to any of claims 2-6, **characterized in that** the waste transit space (213) has horizontal dimensions (HD) that only slightly exceed the area (A) of the waste infeed opening (205).

8. The waste storage tank (202; 302; 402) according to any of claims 2-6, **characterized in that** the waste transit space (213'; 213"; 313A; 413) has horizontal dimensions (HD) that substantially exceed the area (A) of the waste infeed opening (205; 305; 405; 405').

9. The use of the storage tank (102; 202; 302; 402) according to any of claims 1-8, in a mobile vacuum operated waste collection system.

10. The use of the storage tank (102; 202; 302; 402) according to any of claims 1-8, in a stationary vacuum operated waste collection system.

11. A method for enhancing the degree of filling of waste (W) in the waste storage tank (102; 202; 302; 402) as defined in claim 1, by depositing said waste into a vacuum operated waste collection system (101; 201; 301; 401), introducing waste through the waste infeed opening (105; 205; 305; 405), storing said waste in the tank waste collection volume (104; 204; 304; 404) and emptying the waste from the waste storage tank (102; 202; 302; 402) by applying vacuum to the lower tank discharge area (109; 209; 309) of the tank waste collection volume, and assisted by the operation of the waste emptying screw (108; 208; 308; 408) during an emptying phase, periodically activating the waste emptying screw (108; 208; 308; 408) at least in a direction for feeding waste in the tank waste collection volume (104; 204; 304; 404) towards the discharge area (109; 209; 309) during distribution sequences (DS) outside said emptying phase and preventing packing and compression of introduced waste in the discharge area during said distribution sequences by at least partly blocking the transition area between the collection volume (104; 204; 304; 404) of the tank (102; 202; 302; 402) and the discharge area (109; 209; 309) by extending the blocking beam (130-132; 230-232; 330) into the transition area between the tank waste collection volume and the tank discharge area.

12. The method according to claim 11, **characterized by** activating the waste emptying screw (108; 208; 308; 408) both in a direction for feeding waste in the tank waste collection volume (104; 204; 304; 404) towards the tank discharge area (109; 209; 309) and in an opposite direction during at least some of the distribution sequences (DS) outside said emptying phase.

13. The method according to claims 11 or 12, **characterized by** performing the steps of:
- receiving introduced waste in a waste transit space (213; 213'; 213"; 313A, 313B; 413) in the upper infeed area (203; 303) of the tank (202; 302; 402);
- maintaining the received waste in the waste transit space for a pre-storage period (PSP); and
- activating a distribution sequence (DS) by feeding the received and pre-stored waste from the waste transit space into the tank waste collection volume (204; 304; 404) upon expiry of the pre-storage period.

14. The method according to any of claims 11-13, **characterized by:**
- receiving introduced waste in several waste transit spaces (313A; 313B), at levels above each other in and below, respectively, the upper infeed area (303) of the waste storage tank (302);
- maintaining the received waste in the respective waste transit spaces for pre-storage periods (PSP); and
- activating a distribution sequence (DS) by feeding the received and pre-stored waste from the respective waste transit space into the next waste transit space or into the tank waste collection volume (304), respectively, upon expiry of the pre-storage period.

15. The method according to any of claims 11-14, **characterized by** activating said distribution sequences (DS) at fixed intervals scheduled for each specific application.

16. The method according to any of claims 11-15, **characterized by** detecting the number of waste deposits made through the tank inlet opening (105; 205; 305; 405) and by activating said distribution sequences (DS) after detecting a selected number of such deposits of waste into the waste storage tank (102; 202; 302; 402).

17. The method according to any of claims 11-16, **characterized by** registering the elapsed time since a previous distribution sequence (DS) and by activating said distribution sequences after a selected time has elapsed.

## Patentansprüche

1. Abfalllagertank (102; 202; 302; 402) eines Vakuumabfallsammelsystems (101; 201; 301; 401), das eine Abfalleinspeisungsöffnung (105; 205; 305; 405) in einem Einspeisungsbereich (103; 203; 303) davon, ein Tankabfallsammelvolumen (104; 204; 304; 404) zum temporären Lagern von Abfall (W), der über die Einspeisungsöffnung zugeführt wird, einen niedrigeren Tankentladebereich (109; 209; 309), auf den Vakuum zum Entleeren des Abfalllagertanks (102; 202; 302; 402) beaufschlagt wird, und Mittel (108, 115-119; 211-214, 215-219; 311-314; 411-414) zum Verstauen und Verteilen von Abfall (W) in Verteilreihenfolgen (DS) im Inneren des Abfalllagertanks (102; 202; 302; 402) aufweist, wobei die Mittel eine Abfallaustragsschnecke (108; 208; 308; 408) in einem unteren Bereich (106; 206; 306) des Tankabfallsammelvolumens (104; 204; 304; 404) zum Unterstützen des Entleerens des Abfalllagertanks (102; 202; 302; 402) und zugehörige erste Steuermittel (115-119) zum Aktivieren und Steuern des Betriebs der Abfallaustragsschnecke (108; 208; 308; 408) umfassen,
**dadurch gekennzeichnet, dass** die zugehörigen ersten Steuermittel den Betrieb der Abfallaustragsschnecke (108; 208; 308; 408) mindestens in die Richtung zum Einspeisen des Abfalls in das Tankabfallsammelvolumen (104; 204; 304; 404) in Richtung des niedrigeren Tankentladebereichs (109; 209; 309) während der Verteilreihenfolgen (DS) außerhalb der Tankentleerungsphasen aktivieren und steuern, und zwar durch Mittel (130-132; 230-232; 330; 221; 221'; 221''; 321A; 321B; 421A-C) zum Verhindern der Packung und Verdichtung von Abfall im Entladebereich (109; 209; 309) während der Verteilreihenfolgen (DS), umfassend eine Sperrstange (130-132; 230-232; 330), die in einen Übergangsbereich zwischen dem Tankabfallsammelvolumen (104; 204; 304; 404) und dem Tankentladebereich (109; 209; 309) ausfahrbar sowie davon einziehbar ist.

2. Abfalllagertank (202; 302; 402) nach Anspruch 1, **dadurch gekennzeichnet, dass** die Mittel zum Verstauen und Verteilen von Abfall ferner einen Abfalltransitraum (213; 213', 213"; 313A, 313B; 413) zum Empfangen und Vorlagern von abgelagertem Abfall (W), eine obere Einspeisungs- oder Verstauschnecke (211; 211"; 311A, 311B; 411), die im Abfalltransitraum (213; 213'; 213''; 313A, 313B; 413) zum intermittierenden Einspeisen des empfangenen und vorgelagerten Abfalls davon in das Tankabfallsammelvolumen (204; 304; 404) abgestützt wird, und zweite Steuermittel (215-219) zum Steuern der Aktivierung der oberen Einspeisungs- oder Verstauschnecke (211; 211''; 311A, 311B; 411) umfassen.

3. Abfalllagertank (202; 302; 402) nach Anspruch 2, **dadurch gekennzeichnet, dass** die Mittel zum Verhindern der Packung und Verdichtung von zugeführtem Abfall (W) ferner mindestens eine Entladeöffnung (221; 211'; 221''; 321A, 321B; 421A-C) umfassen, die an einem offenen Entladeende des Abfalltransitraums (213) bereitgestellt wird, der einen wannenartigen Kanal (214) auf einem Füllstand bildet, der deutlich über dem Tankentladebereich (209; 309) liegt.

4. Abfalllagertank (102; 202; 302; 402) nach einem der Ansprüche 1-3, **dadurch gekennzeichnet, dass** das erste und zweite Steuermittel (115-119; 215-219) jeweils einen Timer (115; 215) zum Einstellen der Verteilreihenfolge und/oder Vorlagerzeiten (DS/PST) zu geplanten Intervallen, die von der aktuellen Anwendung abhängen, oder alternativ einen Zähler (118, 218) zum Registrieren einer Reihe von Abfalldeponien und zum Einstellen der Verteilreihenfolge und/oder Vorlagerzeiten zu Intervallen, die von der Anzahl registrierter Abfalldeponien abhängen, umfassen.

5. Abfalllagertank (102; 202; 302; 402) nach einem der Ansprüche 2-4, **dadurch gekennzeichnet, dass** die ersten Steuermittel (115-119) mindestens einen Füllstandssensor (117) zum Erfassen eines Abfallfüllstands in dem Abfalllagertank umfassen und/oder die zweiten Steuermittel (215-219) mindestens einen Füllstandssensor (217) zum Erfassen eines Abfallfüllstands in dem Abfalltransitraum (213; 213'; 213''; 313A, 313B; 413) umfassen.

6. Abfalllagertank (202; 302; 402) nach einem der Ansprüche 2-5, **dadurch gekennzeichnet, dass** sich der Abfalltransitraum (213; 313B; 413) direkt unter der Abfalleinspeisungsöffnung (205; 305; 405; 405') befindet.

7. Abfalllagertank (202) nach einem der Ansprüche 2-6, **dadurch gekennzeichnet, dass** der Abfalltransitraum (213) horizontale Abmessungen (HD) aufweist, die nur leicht den Bereich (A) der Abfalleinspeisungsöffnung (205) überschreiten.

8. Abfalllagertank (202; 302; 402) nach einem der Ansprüche 2-6, **dadurch gekennzeichnet, dass** der Abfalltransitraum (213'; 213"; 313A; 413) horizontale Abmessungen (HD) aufweist, die im Wesentlichen den Bereich (A) der Abfalleinspeisungsöffnung (205; 305; 405; 405') überschreiten.

9. Verwendung des Lagertanks (102; 202; 302; 402) nach einem der Ansprüche 1-8 in einem mobilen vakuumbetriebenen Abfallsammelsystem.

10. Verwendung des Lagertanks (102; 202; 302; 402) nach einem der Ansprüche 1-8 in einem ortsfesten vakuumbetriebenen Abfallsammelsystem.

11. Verfahren zum Erhöhen des Füllgrads von Abfall (W) in dem Abfalllagertank (102; 202; 302; 402) nach Anspruch 1 durch Deponieren des Abfalls in einem vakuumbetriebenen Abfallsammelsystem (101; 201; 301; 401), Zuführen des Abfalls durch die Abfalleinspeisungsöffnung (105; 205; 305; 405), Lagern des Abfalls in dem Tankabfallsammelvolumen (104; 204; 304; 404) und Entleeren des Abfalls aus dem Abfalllagertank (102; 202; 302; 402) durch Beaufschlagen von Vakuum auf den niedrigeren Tankentladebereich (109; 209; 309) des Tankabfallsammelvolumens und unterstützt durch den Betrieb der Abfallentleerungsschnecke (108; 208; 308; 408) während einer Entleerungsphase, periodisches Aktivieren der Abfallentleerungsschnecke (108; 208; 308; 408) mindestens in eine Richtung zum Einspeisen des Abfalls in das Tankabfallsammelvolumen (104; 204; 304; 404) in Richtung des Entladebereichs (109; 209; 309) während Verteilreihenfolgen (DS) außerhalb der Entleerungsphase und Verhindern des Packens und Verdichtens von zugeführtem Abfall in den Entladebereich während der Verteilreihenfolgen durch mindestens teilweises Blockieren des Übergangsbereichs zwischen dem Sammelvolumen (104; 204; 304; 404) des Tanks (102; 202; 302; 402) und dem Entladebereich (109; 209; 309) durch Ausfahren der Sperrstange (130-132; 230-232; 330) in dem Übergangsbereich zwischen dem Tankabfallsammelvolumen und dem Tankentladebereich.

12. Verfahren nach Anspruch 11, **gekennzeichnet durch** Aktivieren der Abfallentleerungsschnecke (108; 208; 308; 408) sowohl in eine Richtung zum Einspeisen des Abfalls in das Tankabfallsammelvolumen (104; 204; 304; 404) in Richtung des Tankentladebereichs (109; 209; 309) als auch in eine entgegengesetzte Richtung während mindestens einigen der Verteilreihenfolgen (DS) außerhalb der Entleerungsphase.

13. Verfahren nach Anspruch 11 oder 12, **gekennzeichnet durch** Durchführen der folgenden Schritte:
- Empfangen des zugeführten Abfalls in einem Abfalltransitraum (213; 213'; 213''; 313A, 313B; 413) in dem oberen Einspeisungsbereich (203; 303) des Tanks (202; 302; 402);
- Aufrechterhalten des empfangenen Abfalls im Abfalltransitraum über einen Vorlagerzeitraum (PSP); und
- Aktivieren einer Verteilreihenfolge (DS) durch Einspeisen des von dem Abfalltransitraum empfangenen und vorgelagerten Abfalls in das Tankabfallsammelvolumen (204; 304; 404) bei Ablauf des Vorlagerzeitraums.

14. Verfahren nach einem der Ansprüche 11-13, durch Folgendes gekennzeichnet:
- Empfangen des zugeführten Abfalls in mehreren Abfalltransiträumen (313A; 313B) mit Füllständen übereinander in bzw. unter dem oberen Einspeisungsbereich (303) des Abfalllagertanks (302);
- Aufrechterhalten des empfangenen Abfalls in den jeweiligen Abfalltransiträumen über Vorlagerzeiträume (PSP); und
- Aktivieren einer Verteilreihenfolge (DS) durch Einspeisen des empfangenen und vorgelagerten Abfalls von dem jeweiligen Abfalltransitraum in den nächsten Abfalltransitraum bzw. in das Tankabfallsammelvolumen (304) bei Ablauf des Vorlagerzeitraums.

15. Verfahren nach einem der Ansprüche 11-14, **gekennzeichnet durch** Aktivieren der Verteilreihenfolgen (DS) zu festgelegten Intervallen, die für jede spezifische Anwendung geplant sind.

16. Verfahren nach einem der Ansprüche 11-15, **gekennzeichnet durch** Erfassen der Anzahl an Abfalldeponien, die durch die Tankeinlassöffnung (105; 205; 305; 405) angelegt wurden, und Aktivieren der Verteilreihenfolgen (DS) nach dem Erfassen einer ausgewählten Anzahl an solchen Abfalldeponien in dem Abfalllagertank (102; 202; 302; 402).

17. Verfahren nach einem der Ansprüche 11-16, **gekennzeichnet durch** Registrieren der verstrichenen Zeit seit einer vorherigen Verteilreihenfolge (DS) und Aktivieren der Verteilreihenfolge, nachdem eine ausgewählte Zeit verstrichen ist.

## Revendications

1. Cuve de stockage d'ordures (102 ; 202 ; 302 ; 402) d'un système de collecte d'ordures sous vide (101 ; 201 ; 301 ; 401), ayant une ouverture d'admission d'ordures (105 ; 205 ; 305 ; 405) dans une zone d'admission (103 ; 203 ; 303) de celle-ci, un volume de collecte d'ordures de cuve (104 ; 204 ; 304 ; 404) pour stocker temporairement des ordures (W) introduites à travers l'ouverture d'admission, une zone de décharge de cuve inférieure (109 ; 209 ; 309) à laquelle est appliqué un vide pour vider la cuve de stockage d'ordures (102 ; 202 ; 302 ; 402) et un moyen (108 ; 115-119 ; 211-214, 215-219 ; 311-314 ; 411-414) pour stocker et distribuer des ordures (W) en séquences de distribution (DS) à l'intérieur de la cuve de stockage d'ordures (102 ; 202 ; 302 ; 402), ledit moyen comprenant une vis de vidage d'ordures (108 ; 208 ; 308 ; 408) dans une zone inférieure (106 ; 206 ; 306) du volume de collecte d'ordures de cuve (104 ; 204 ; 304 ; 404) pour aider au vidage de la cuve de stockage d'ordures (102 ; 202 ; 302 ; 402), et un premier moyen de commande (115-119) associé pour activer et commander le fonctionnement de la vis de vidage d'ordures (108 ; 208 ; 308 ; 408),
**caractérisée en ce que** le premier moyen de commande associé active et commande le fonctionnement de la vis de vidage d'ordures (108 ; 208 ; 308 ; 408) au moins dans la direction pour alimenter des ordures dans le volume de collecte d'ordures de cuve (104 ; 204 ; 304 ; 404) vers la zone de décharge de cuve inférieure (109 ; 209 ; 309) durant les séquences de distribution (DS) en dehors de phases de vidage de cuve, et par un moyen (130-132 ; 230-232 ; 330 ; 221 ; 221' ; 221" ; 321A, 321B ; 421A-C) pour empêcher le compactage et la compression d'ordures dans la zone de décharge (109 ; 209 ; 309) durant lesdites séquences de distribution (DS) comprenant un faisceau de blocage (130-132 ; 230-232 ; 330) pouvant s'étendre dans une zone de transition entre le volume de collecte d'ordures de cuve (104 ; 204 ; 304 ; 404) et la zone de décharge de cuve (109 ; 209 ; 309), et pouvant se rétracter de celle-ci.

2. Cuve de stockage d'ordures (202 ; 302 ; 402) selon la revendication 1, **caractérisée en ce que** le moyen pour stocker et distribuer des ordures comprend en outre un espace de transit d'ordures (213 ; 213' ; 213'' ; 313A, 313B ; 413) pour recevoir et pré-stocker des ordures (W) déposées, une vis d'alimentation ou de stockage supérieure (211 ; 211'' ; 311A, 311B, 411) supportée dans l'espace de transit d'ordures (213 ; 213' ; 213'' ; 313A, 313B ; 413) pour alimenter de manière intermittente les ordures reçues et pré-stockées depuis celui-ci et dans le volume de collecte d'ordures de cuve (204 ; 304 ; 404) et un second moyen de commande (215-219) pour commander l'activation de la vis d'alimentation ou de stockage supérieure (211 ; 211" ; 311A, 311B ; 411).

3. Cuve de stockage d'ordures (202 ; 302 ; 402) selon la revendication 2, **caractérisée en ce que** le moyen pour empêcher le compactage et la compression d'ordures (W) introduites comprend en outre au moins une ouverture de décharge (221 ; 221' ; 221'' ; 321A, 321B ; 421A-C) fournie au niveau d'une extrémité de décharge ouverte de l'espace de transit d'ordures (213) formant un canal en forme d'auge (214) à un niveau bien au-dessus de la zone de décharge de cuve (209 ; 309) .

4. Cuve de stockage d'ordures (102 ; 202 ; 302 ; 402) selon l'une quelconque des revendications 1 à 3, **caractérisée en ce que** les premier et second moyens de commande (115-119 ; 215-219) comprennent chacun un temporisateur (115 ; 215) pour régler des temps de séquence de distribution et/ou de pré-stockage (DS/PST) à des intervalles programmés qui dépendent de l'application réelle ou en variante un compteur (118, 218) pour enregistrer un nombre de dépôts d'ordures et pour régler les temps de séquence de distribution et/ou de pré-stockage à des intervalles qui dépendent du nombre de dépôts d'ordures enregistrés.

5. Cuve de stockage d'ordures (102 ; 202 ; 302 ; 402) selon l'une quelconque des revendications 2 à 4, **caractérisée en ce que** les premiers moyens de commande (115-119) comprennent au moins un capteur de niveau (117) pour détecter un niveau de remplissage d'ordures dans la cuve de stockage d'ordures et/ou les seconds moyens de commande (215-219) comprennent au moins un capteur de niveau (217) pour détecter un niveau de remplissage d'ordures dans l'espace de transit d'ordures (213 ; 213' ; 213" ; 313A, 313B ; 413).

6. Cuve de stockage d'ordures (202 ; 302 ; 402) selon l'une quelconque des revendications 2 à 5, **caractérisée en ce que** l'espace de transit d'ordures (213 ; 313B ; 413) est situé directement sous l'ouverture d'admission d'ordures (205 ; 305 ; 405 ; 405').

7. Cuve de stockage d'ordures (202) selon l'une quelconque des revendications 2 à 6, **caractérisée en ce que** l'espace de transit d'ordures (213) a des dimensions horizontales (HD) qui ne dépassent que légèrement la zone (A) de l'ouverture d'admission d'ordures (205) .

8. Cuve de stockage d'ordures (202 ; 302 ; 402) selon l'une quelconque des revendications 2 à 6, **caractérisée en ce que** l'espace de transit d'ordures (213' ; 213" ; 313A ; 413) a des dimensions horizontales (HD) qui dépassent sensiblement la zone (A) de l'ouverture d'admission d'ordures (205 ; 305 ; 405 ; 405').

9. Utilisation de la cuve de stockage (102 ; 202 ; 302 ; 402) selon l'une quelconque des revendications 1 à 8, dans un système de collecte d'ordures fonctionnant sous vide mobile.

10. Utilisation de la cuve de stockage (102 ; 202 ; 302 ; 402) selon l'une quelconque des revendications 1 à 8, dans un système de collecte d'ordures fonctionnant sous vide stationnaire.

11. Procédé pour améliorer le degré de remplissage d'ordures (W) dans la cuve de stockage d'ordures (102 ; 202 ; 302 ; 402) selon la revendication 1, par le dépôt desdites ordures dans un système de collecte d'ordures fonctionnant sous vide (101 ; 201 ; 301 ; 401), l'introduction d'ordures à travers l'ouverture d'admission d'ordures (105 ; 205 ; 305 ; 405), le stockage desdites ordures dans le volume de collecte d'ordures de cuve (104 ; 204 ; 304 ; 404) et le vidage des ordures de la cuve de stockage d'ordures (102 ; 202 ; 302 ; 402) par l'application d'un vide à la zone de décharge de cuve inférieure (109 ; 209 ; 309) du volume de collecte d'ordures de cuve, et aidé par le fonctionnement de la vis de vidage d'ordures (108 ; 208 ; 308 ; 408) durant une phase de vidage, l'activation périodique de la vis de vidage d'ordures (108 ; 208 ; 308 ; 408) au moins dans une direction pour alimenter des ordures dans le volume de collecte d'ordures de cuve (104 ; 204 ; 304 ; 404) vers la zone de décharge (109 ; 209 ; 309) durant des séquences de distribution (DS) en dehors de ladite phase de vidage et le fait d'empêcher le compactage et la compression d'ordures introduites dans la zone de décharge durant lesdites séquences de distribution en bloquant au moins partiellement la zone de transition entre le volume de collecte (104 ; 204 ; 304 ; 404) de la cuve (102 ; 202 ; 302 ; 402) et la zone de décharge (109 ; 209 ; 309) par l'extension du faisceau de blocage (130-132 ; 230-232 ; 330) dans la zone de transition entre le volume de collecte d'ordures de cuve et la zone de décharge de cuve.

12. Procédé selon la revendication 11, **caractérisé par** l'activation de la vis de vidage d'ordures (108 ; 208 ; 308 ; 408) à la fois dans une direction pour alimenter des ordures dans le volume de collecte d'ordures de cuve (104 ; 204 ; 304 ; 404) vers la zone de décharge de cuve (109 ; 209 ; 309) et dans une direction opposée durant au moins certaines des séquences de distribution (DS) en dehors de ladite phase de vidage.

13. Procédé selon les revendications 11 ou 12, **caractérisé par** la réalisation des étapes :
- de réception des ordures introduites dans un espace de transit d'ordures (213 ; 213' ; 213'' ; 313A, 313B ; 413) dans la zone d'admission supérieure (203 ; 303) de la cuve (202 ; 302 ; 402) ;
- de maintien des ordures reçues dans l'espace de transit d'ordures pendant une période de pré-stockage (PSP) ; et
- d'activation d'une séquence de distribution (DS) par l'alimentation des ordures reçues et pré-stockées depuis l'espace de transit d'ordures dans le volume de collecte d'ordures de cuve (204 ; 304 ; 404) à l'expiration de la période de pré-stockage.

14. Procédé selon l'une quelconque des revendications 11 à 13, **caractérisé par** :
- la réception d'ordures introduites dans plusieurs espaces de transit d'ordures (313A, 313B), à des niveaux au-dessus l'un de l'autre dans et sous, respectivement, la zone d'admission supérieure (303) de la cuve de stockage d'ordures (302) ;
- le maintien des ordures reçues dans les espaces de transit d'ordures respectifs pendant des périodes de pré-stockage (PSP) ; et
- l'activation d'une séquence de distribution (DS) par l'alimentation des ordures reçues et pré-stockées depuis l'espace de transit d'ordures respectif dans l'espace de transit d'ordures suivant ou dans le volume de collecte d'ordures de cuve (304), respectivement, à l'expiration de la période de pré-stockage.

15. Procédé selon l'une quelconque des revendications 11 à 14, **caractérisé par** l'activation desdites séquences de distribution (DS) à des intervalles fixes programmés pour chaque application spécifique.

16. Procédé selon l'une quelconque des revendications 11 à 15, **caractérisé par** la détection du nombre de dépôts d'ordures effectués à travers l'ouverture d'admission de cuve (105 ; 205 ; 305 ; 405) et par l'activation desdites séquences de distribution (DS) après la détection d'un nombre sélectionné de tels dépôts d'ordures dans la cuve de stockage d'ordures (102 ; 202 ; 302 ; 402).

17. Procédé selon l'une quelconque des revendications 11 à 16, **caractérisé par** l'enregistrement du temps écoulé depuis une séquence de distribution (DS) précédente et par l'activation desdites séquences de distribution après qu'un temps sélectionné s'est écoulé.
